(19) Europäisches Patentamt
European Patent Office
Office européen des brevets

(11) **EP 2 159 401 A1**

(12) **DEMANDE DE BREVET EUROPEEN**

(43) Date de publication:
**03.03.2010 Bulletin 2010/09**

(51) Int Cl.:
***F02D 41/00*** *(2006.01)*     ***F02D 41/06*** *(2006.01)*

(21) Numéro de dépôt: **09166180.1**

(22) Date de dépôt: **23.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.08.2008 FR 0855693**

(71) Demandeur: **Peugeot Citroën Automobiles SA**
**78140 Vélizy-Villacoublay (FR)**

(72) Inventeurs:
• **Joly, Philippe**
  **78950 Gambais (FR)**
• **Vienne, Mathieu**
  **92250, La Garenne Colombes (FR)**

(74) Mandataire: **Ménès, Catherine**
**Peugeot Citroën Automobiles SA**
**Propriété Industrielle (LG081)**
**18, rue des Fauvelles**
**92250 La Garenne Colombes (FR)**

(54) **Procédé de détermination d'un paramètre de contrôle moteur en fonction d'un carburant à injecter au démarrage d'un moteur à combustion interne**

(57) L'invention concerne un procédé de détermination d'un paramètre de contrôle moteur (Q-Inj, P-Opt) en fonction d'un carburant (C-Inj). Ce procédé comporte une étape (30, 32) d'estimation d'une quantité théorique (Q-Inj-Th) de carburant à injecter au démarrage dans le moteur par l'utilisation d'un modèle de calcul basé sur une composition chimique prédéterminée du carburant déterminée par application (30) d'un modèle de composition chimique selon un ensemble de composants élémentaires et une étape (34, 36, 38, 40, 42, 44, 46, 48) de détermination du paramètre de contrôle moteur (Q-Inj, P-Opt) par correction d'une valeur de référence optimale (P-Réf-Opt) de ce paramètre mesurée pour un carburant de référence à l'aide de cette quantité théorique (Q-Inj-Th) estimée et de paramètres (C1, C2, K1, K2, K3) dont au moins une partie (C1, C2) est déterminée par une validation préalable (48), sur une pluralité de carburants prédéterminés, du modèle de composition chimique appliqué au carburant (C-Inj).

*Figure 2*

EP 2 159 401 A1

**EP 2 159 401 A1**

**Description**

La présente invention concerne un procédé de détermination d'un paramètre de contrôle moteur en fonction d'un carburant à injecter au démarrage d'un moteur à combustion interne.

La combustion interne réalisée par les moteurs montés dans les véhicules automobiles produit des émissions polluantes. Ces polluants sont susceptibles d'être libérés dans l'atmosphère et de dégrader l'environnement. Des normes anti-pollution de plus en plus sévères sont donc mises en place, notamment pour les moteurs à allumage commandé et injection indirecte. Afin de respecter les normes, des systèmes de post-traitement des gaz d'échappement se sont développés sur les véhicules. Les systèmes de post-traitement catalytiques sont basés principalement sur l'emploi de métaux précieux et permettent de réduire l'émission de polluants hors du véhicule.

Cependant, le bon fonctionnement des catalyseurs n'est assuré que pour des températures supérieures à une température d'amorçage. De ce fait, lors du démarrage du moteur à froid, le traitement des polluants n'est pas optimal. Ainsi, 80% des émissions polluantes du véhicule sont émises pendant les 40 à 80 premières secondes après le démarrage du moteur.

Dans ces conditions, il apparaît intéressant de diminuer la quantité de polluants émis au démarrage du véhicule. Un des moyens est d'utiliser le moins de carburant possible pour le démarrage du moteur tout en assurant un mélange air/carburant proche de la stoechiométrie. Cela suppose que la quantité de carburant sous forme gazeuse dans le mélange et/ou que d'autres paramètres moteurs soit bien maîtrisés.

Mais la détermination de la quantité minimale de carburant à injecter pour assurer le démarrage du moteur et celle des autres paramètres moteur est délicate. Cette évaluation dépend en effet beaucoup des caractéristiques du carburant, parmi lesquelles sa volatilité. Or il existe une grande diversité de carburants d'un pays à l'autre et selon la saison considérée. Certains carburants se vaporisant bien sont qualifiés de carburants HPVR (pour Haute Pression de Vapeur Reid), d'autres se vaporisant mal sont qualifiés de carburants BPVR (pour Basse Pression de Vapeur Reid).

Pour garantir une quantité de carburant sous forme gazeuse suffisante pour réaliser de bonnes combustions au démarrage et à la mise en action du moteur, les calibrations sont donc réalisées avec un carburant représentatif d'un carburant de type BPVR. Des vérifications sont réalisées ensuite pour s'assurer que lorsque l'on utilise un carburant HPVR, les quantités injectées ne soient pas trop grandes et ne risquent pas d'empêcher la combustion par un excès de carburant sous forme vapeur (mélange non inflammable).

Le réglage est donc unique quel que soit le carburant. La conséquence est que, pour assurer un démarrage du moteur pour tous les carburants, la quantité de carburant injectée est supérieure à la quantité juste nécessaire qui devrait idéalement être injectée. L'excès de carburant sous forme vapeur ne participe pas à la combustion et se retrouve à l'échappement sous forme d'hydrocarbures imbrûlés. Ceci a un impact direct sur les émissions du moteur, d'autant plus que lors du démarrage du moteur, le catalyseur n'est pas amorcé. Cet excès de carburant est aussi synonyme de surconsommation de carburant dans les phases froides de fonctionnement dans les cas d'utilisation de carburants HPVR. Enfin, lors de démarrage par grand froid (en dessous de -15°C par exemple), l'excès de carburant sous forme vapeur crée également des fumées noires.

L'évaluation de la quantité minimale de carburant à injecter et des autres paramètres moteur pour assurer le démarrage du moteur dépend aussi d'autres caractéristiques que la volatilité comme par exemple la teneur en MTBE (Méthyl Tertio Butyl Ether) ou ETBE (Ethyl Tertio Butyl Ether), le pourcentage d'alcool et le rapport stoechiométrique. Outre leur impact sur la volatilité globale du carburant, ces caractéristiques ajoutent un élément supplémentaire dans le besoin d'adaptation de la quantité injectée au démarrage. Pour ces caractéristiques, il est nécessaire d'adapter le rapport air/carburant pour obtenir la richesse d'inflammation du mélange. Or le réglage unique utilisé permet de couvrir des plages de variations de ces caractéristiques par de la richesse excessive générant ainsi les mêmes problématiques antipollution et de consommation que celles évoquées plus haut.

Actuellement, une fois que le démarrage a été effectué, il est connu d'utiliser des sondes situées dans la ligne d'échappement du véhicule permettant de détecter que trop de carburant est injecté dans le moteur. Ce défaut est corrigé en diminuant progressivement la quantité de carburant injectée jusqu'à la disparition de la détection du défaut par les sondes.

Cette technique qualifiée de « a posteriori » implique une surconsommation de carburant au démarrage par rapport à une situation optimisée. Cette surconsommation engendre une émission d'une quantité plus importante de polluants par rapport à la situation optimale.

Il existe aussi des démarches de détermination dite « a priori » de la quantité de carburant nécessaire au démarrage. Ces méthodes sont basées sur des paramètres de volatilité du carburant comme les points de la courbe de distillation ou toute combinaison linéaire de ces paramètres. Ces derniers procédés sont communément appelés « indice d'agrément de conduite » ou « driveability index » en anglais.

Toutefois, les modèles existants utilisant une information sur la volatilité du carburant ne prennent pas bien en considération les interactions entre espèces. Les modèles existants ne sont pas capables de déterminer correctement la quantité de carburant nécessaire au démarrage. Ceci est d'autant plus vrai pour des carburants contenant des composés polaires comme les alcools. Compte tenu de la variabilité des carburants de part le monde, cela engendre des problèmes de robustesse de la prestation de démarrage et de mise en action du moteur : démarrage impossible, mauvais démarrage, calage, agrément de conduite dégradé après démarrage.

Il existe donc un besoin pour un procédé qui assure le démarrage d'un moteur à allumage commandé par injection en utilisant la quantité de carburant la plus juste possible et/ou en estimant les autres paramètres moteur de la façon la plus juste possible.

L'invention a pour objet un procédé de détermination d'un paramètre de contrôle moteur comportant l'estimation d'une quantité théorique de carburant à injecter au démarrage dans le moteur par l'utilisation d'un modèle de calcul basé sur une composition chimique prédéterminée du carburant déterminée par application d'un modèle de composition chimique selon un ensemble prédéterminé de composants élémentaires, et détermination du paramètre de contrôle moteur par correction d'une valeur de référence optimale de ce paramètre mesurée pour un carburant de référence à l'aide de cette quantité théorique estimée et de paramètres dont au moins une partie est déterminée par une validation préalable, sur une pluralité de carburants prédéterminés, du modèle de composition chimique appliqué au carburant.

Ainsi, à partir de la composition chimique détaillée d'un carburant établie sur la base d'un modèle de composition, la détermination du paramètre de contrôle moteur est rendue possible à l'aide d'un modèle de calcul permettant de fournir une quantité théorique de carburant à injecter corrigée par une vérification de la cohérence du modèle de composition choisi sur une pluralité de carburants de test connus.

La détermination de carburant injectée au démarrage et plus généralement différent paramètres de contrôle moteur peuvent donc être optimisés. De ce fait, ce procédé permet de réduire les émissions polluantes d'un véhicule ce qui diminue la charge en métaux précieux du post-traitement catalytique. Le prix de revient de fabrication du véhicule est ainsi réduit. De plus, la qualité et la robustesse de la prestation démarrage mise en action sont améliorées, notamment parce que cette prestation ne dépend pas du pays ou de la saison considérés.

De façon optionnelle, la composition chimique du carburant à injecter est déterminée à l'aide d'un dispositif d'analyse embarqué à bord d'un véhicule, notamment de type capteur opto-électronique utilisant la spectroscopie proche infrarouge.

De façon optionnelle également, un procédé selon l'invention comporte le calcul d'un ratio entre une somme de quantités réelles de carburant injectées entre le démarrage et une vitesse de rotation prédéterminée du moteur lors d'un démarrage précédent et une somme de quantités optimales d'un carburant de référence à injecter entre le démarrage et cette vitesse de rotation prédéterminée du moteur, et ce ratio est pris en compte dans la correction selon un coefficient de pondération déterminé par la validation préalable, sur la pluralité de carburants prédéterminés, du modèle de composition chimique appliqué au carburant.

De façon optionnelle également, le paramètre de contrôle moteur est une quantité de carburant à injecter au démarrage du moteur à combustion interne.

De façon optionnelle également, la détermination de la quantité réelle de carburant à injecter au démarrage dans le moteur comporte les étapes suivantes : calcul d'un ratio supplémentaire entre la quantité théorique de carburant à injecter au démarrage dans le moteur et une quantité théorique de carburant de référence à injecter au démarrage dans le moteur ; détermination d'un coefficient multiplicateur sur la base du ratio et du ratio supplémentaire, et ; détermination de la quantité réelle de carburant à injecter au démarrage dans le moteur, en tant que produit de ce coefficient multiplicateur et d'une valeur mesurée d'une quantité optimale de carburant de référence à injecter au démarrage.

De façon optionnelle également, la détermination du coefficient multiplicateur comporte une étape de vérification que le coefficient multiplicateur est compris entre une valeur minimale prédéterminée et une valeur maximale prédéterminée.

De façon optionnelle également, lors de l'étape de vérification si le coefficient multiplicateur est inférieur à la valeur minimale, celle-ci lui est affectée, si le coefficient multiplicateur est supérieur à la valeur maximale, celle-ci lui est affectée, et sinon, le coefficient multiplicateur est inchangé.

De façon optionnelle également, le coefficient multiplicateur est déterminé par une combinaison linéaire du ratio et du ratio supplémentaire.

De façon optionnelle également, les coefficients de pondération du ratio et du ratio supplémentaire dans la combinaison linéaire sont estimés lors de la validation préalable, sur la pluralité de carburants prédéterminés, du modèle de composition chimique appliqué au carburant à injecter.

De façon optionnelle également, le coefficient multiplicateur est choisi égal au ratio supplémentaire avant l'étape de vérification, lors d'un premier démarrage du moteur avec ce carburant, et égal à la combinaison linéaire du ratio et du ratio supplémentaire avant l'étape de vérification, lors d'autres démarrages du moteur avec ce carburant.

L'invention sera mieux comprise à l'aide de la description qui va suivre, donnée uniquement à titre d'exemple et faite en se référant aux dessins annexés dans lesquels :

- la figure 1 illustre les étapes successives d'une estimation de quantité théorique de carburant à injecter dans un moteur par l'utilisation d'un modèle de calcul basé sur une composition chimique prédéterminée du carburant,

- la figure 2 illustre les étapes successives d'un procédé de détermination d'un paramètre de contrôle moteur selon un mode de réalisation de l'invention.

Estimation a priori d'une quantité théorique de carburant à injecter

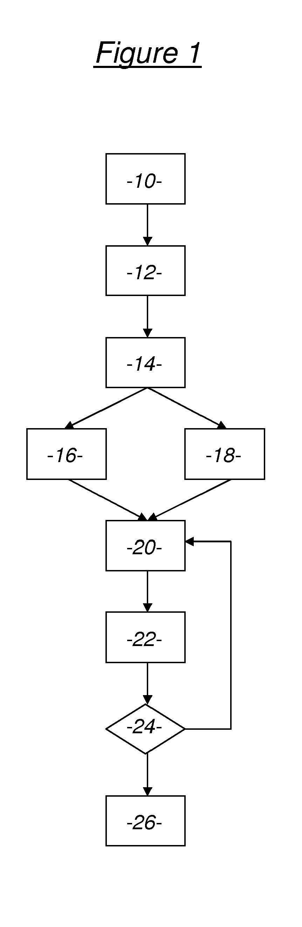

Comme représenté sur la figure 1, un procédé selon l'invention comporte une estimation d'une quantité théorique de carburant à injecter au démarrage dans un moteur de véhicule automobile par l'utilisation d'un modèle de calcul basé sur une composition chimique prédéterminée de ce carburant.

Ce procédé s'applique à un moteur à injection indirecte dans lequel un mélange d'une phase gazeuse d'air et de carburant et d'une phase liquide de carburant est injecté dans le moteur. L'estimation de la quantité théorique de carburant à injecter comprend ainsi par exemple le calcul de la composition chimique de la phase gazeuse et de la phase liquide à l'interface entre la phase gazeuse et la phase liquide, par utilisation d'un premier modèle de calcul. De plus, à l'aide de la composition chimique de la phase gazeuse, il est possible de calculer le taux de transport de la phase gazeuse, par utilisation d'un second modèle de calcul.

Il est ainsi possible, à partir de la composition chimique détaillée d'un carburant, d'estimer la composition chimique de la phase gazeuse qui est injectée au niveau de la chambre à combustion du moteur. En conséquence, la quantité théorique de carburant nécessaire au démarrage du moteur peut être déterminée a priori.

L'estimation de quantité théorique de carburant à injecter peut comprendre une étape 10 de détermination de la composition chimique détaillée du carburant. La composition chimique détaillée donne accès aux différentes espèces du carburant ainsi qu'à leur proportion dans le carburant. La composition chimique détaillée peut provenir d'une analyse réalisée par exemple au niveau du réservoir à essence du véhicule par l'une ou toute combinaison des techniques suivantes : chromatographie en phase gazeuse, spectrométrie de masse, résonance magnétique nucléaire (RMN), spectroscopie ultraviolet ou spectroscopie infrarouge.

L'analyse du carburant peut être effectuée par un organe d'analyse de laboratoire. La chromatographie et la spectrométrie de masse peuvent notamment être utilisées en laboratoire. De tels instruments permettent en effet d'obtenir une composition chimique du carburant très précise pour la mise au point des moteurs.

La composition chimique du carburant peut aussi être déterminée par un organe d'analyse embarqué à bord du véhicule. Cela permet d'obtenir la composition de l'essence dans le véhicule. En particulier, un capteur opto-électronique qui exploite la spectroscopie proche infrarouge (en anglais « Near InfraRed spectroscopy » ou « spectroscopy NIR ») peut être utilisé. Un tel capteur, généralement appelé capteur NIR, a l'avantage d'être peu encombrant. La composition chimique détaillée ainsi obtenue sert de donnée d'entrée pour le calcul de la composition dans la phase gazeuse qui est décrit dans la suite.

Dans certains cas, la composition chimique détaillée du carburant peut impliquer un temps de calcul trop important pour effectuer le calcul de la composition dans la phase gazeuse. Afin de réduire ce temps de calcul, il peut ainsi être intéressant de procéder à une étape optionnelle 12 d'utilisation d'un nombre réduit d'espèces du carburant trouvées dans l'étape 10.

A titre d'exemple, pour représenter une essence commerciale Sans Plomb 95, on utilise une composition chimique réduite à 15 espèces: 12 hydrocarbures et 3 composés oxygénés. Le tableau suivant donne ces espèces classées par température d'ébullition (T°éb) croissante

| Espèce chimique | T°éb (K) |
|---|---|
| n-Butane | 273 |
| Isopentane | 301 |
| n-Pentane | 310 |
| Méthylbutène | 312 |
| MTBE | 328 |
| 2-Méthylpentane | 334 |
| Hexène | 337 |
| ETBE | 346 |
| Ethanol | 351 |
| Cyclohexane | 354 |
| n-Heptane | 372 |

(suite)

| Espèce chimique | T°éb (K) |
|---|---|
| 2,2,4-Triméthylpentane | 372 |
| Toluène | 384 |
| m-Xylène | 412 |
| 1,2,4-Triméthylbenzène | 443 |

Par ailleurs, la composition de l'air peut aussi être simplifiée et réduite à deux espèces : dioxygène (02), diazote (N2).

La composition chimique réduite ou détaillée ainsi obtenue à l'étape 10 ou 12 est notamment utilisée pour une étape 14 de calcul de la composition chimique de la phase gazeuse et de la phase liquide. Lors de cette étape, la composition chimique de la phase gazeuse du carburant est calculée à tout instant.

Le calcul est réalisé à l'aide d'un modèle. Ce modèle est un modèle thermodynamique et plus précisément un modèle d'équilibre thermodynamique chimique. Le modèle thermodynamique permet à la fois de déterminer les compositions de la phase liquide et de la phase gazeuse du carburant à l'équilibre thermodynamique.

Le modèle thermodynamique repose sur l'utilisation d'une condition d'équilibre thermodynamique et utilise des données thermodynamiques (température, pression, ...) ainsi que la composition chimique du mélange entre l'air et le carburant réalisé au niveau du conduit d'admission du moteur.

En thermodynamique, deux phases (par exemple liquide, gaz ou solide) sont en équilibre lorsque l'enthalpie libre notée G du système composé des deux phases atteint son minimum, soit lorsque la différentielle de l'enthalpie libre notée dG est nulle. Or, à pression et température fixées, la différentielle de l'enthalpie libre s'écrit dans le cas particulier d'un mélange binaire gaz-liquide :

$$dG = \sum \mu_{i,gaz} dn_{i,gaz} + \sum \mu_{i,liq} dn_{i,liq} \quad \text{(E1)}$$

où n désigne le nombre de moles, l'indice i l'espèce considérée, l'indice gaz la phase gazeuse, l'indice liq la phase liquide et $\mu$ le potentiel chimique.

De plus, lorsque le système est fermé et qu'aucune réaction chimique n'a lieu, la conservation de la matière implique que :

$$dn_{i,gaz} + dn_{i,liq} = 0 \quad \text{(E2)}$$

Les conditions de l'équation E2 peuvent être considérées comme remplies dans le cas du carburant contenu dans le réservoir à essence du véhicule.

Il peut être déduit des deux équations E1 et E2 que la condition d'équilibre thermodynamique du modèle thermodynamique devient :

$$\sum \left( \mu_{i,gaz} - \mu_{i,liq} \right) dn_{i,gaz} = 0 \quad \text{(E3)}$$

De ce fait, le modèle thermodynamique peut se traduire par l'égalité des potentiels chimiques de chaque espèce i dans chacune des phases liquides ou gazeuses. Or, pour toute phase (gazeuse ou liquide), le potentiel chimique est défini par la relation E4 :

$$\mu_i\left(T, P_i\right) = \mu^{\circ}\left(T, P_i{}^{\circ}\right) + RT \ln\left(\frac{f_i}{f_i{}^{\circ}}\right)_{(E4)}$$

où T est la température, Pi est la pression de l'espèce considérée, R la constante des gaz parfaits, l'exposant «°» désigne les conditions standard soit une pression de 1 bar et une température de 0°C et enfin fi est la fugacité de l'espèce i dans une phase donnée.

Ainsi, la condition d'équilibre thermodynamique du modèle thermodynamique se traduit par l'égalité des fugacités de chaque espèce i dans chacune des phases. La condition d'équilibre entre les phases est donc pour chaque espèce i :

$$f_{i,gaz} = f_{i,liq} \quad (E5)$$

La fugacité s'exprimant par définition comme :

$$f_{i,x} = \varphi_{i,x}.P.X_{i,x} \, (E6)$$

avec φi,x le coefficient de fugacité de l'espèce i dans la phase x (gaz pour gazeux, liq pour liquide), Xi,x la fraction molaire de l'espèce i dans la phase x (gaz pour gazeux, liq pour liquide) et P la pression dans le conduit d'admission du moteur.

Le modèle thermodynamique se traduit donc par l'égalité E7 pour chaque espèce i:

$$\varphi_{i,gaz}.X_{i,gaz} = \varphi_{i,liq}.X_{i,liq} \, (E7)$$

La résolution de l'équation E7 pour l'ensemble des espèces considérées permet d'obtenir la composition chimique des phases gazeuse et liquide à l'interface entre la phase gazeuse et la phase liquide. La résolution de l'équation E7 peut être effectuée de plusieurs manières différentes.

Une première méthode consiste à calculer le coefficient de fugacité de chacune des espèces du carburant. Les coefficients de fugacité sont déduits à partir de l'équation d'état du système considéré par dérivation par rapport au nombre de moles.

Une équation d'état est une relation algébrique entre la pression P, la température T et le volume V. L'équation d'état est souvent exprimée en termes d'une grandeur thermodynamique Z appelée facteur de compressibilité et définie par la relation E8 :

$$Z = \frac{PV}{RT} \, (E8)$$

où R est la constante des gaz parfaits.

Les équations d'état cubiques figurent parmi les quelques types d'équations d'état existantes. Fortement utilisées dans l'industrie, les équations cubiques sont assez simples et peuvent s'exprimer sous forme de polynômes du troisième degré en Z. Les équations cubiques ont l'avantage de rendre facultative la résolution des volumes qui est une méthode itérative nécessitant un temps de calcul non négligeable. Les deux équations les plus utilisées dans l'ingénierie sont l'équation de Peng et Robinson (notée équation PR dans la suite) et l'équation de Soave, Redlich et Kwong (notée équation SRK dans la suite).

Une équation d'état cubique peut s'exprimer en fonction du facteur de compressibilité, sous la forme de l'équation E9 :

$$Z^3 - \left(1 + B* - kB*\right)Z^2 + \left(A* + k'B*^2 - kB* - kB*^2\right)Z - \left(A*B* + k'B*^2 + k'B*^3\right) = 0 \quad \text{(E9)}$$

où k, k', A* et B* sont des paramètres détaillés dans les paragraphes qui suivent.

Les constantes k et k' permettent de distinguer les différentes équations d'état. Par exemple, l'équation PR correspond à des valeurs de k = 2 et k' = -1 tandis que l'équation SRK est caractérisée par les valeurs k = 1 et k' = 0.

Les paramètres A* et B* sont définis par les relations suivantes :

$$A* = \frac{aP}{R^2 T^2} \quad \text{et} \quad B* = \frac{bP}{RT} \quad \text{(E10)}$$

où a et b sont respectivement le paramètre énergétique et le covolume. Plusieurs expressions de a et b existent dans la littérature.

Le calcul des paramètres a et b implique de connaître des propriétés physiques supplémentaires des espèces d'hydrocarbures et en particulier leur température critique notée Tc, leur pression critique notée Pc et le facteur acentrique des corps pur noté ω.

Par exemple, il est possible d'utiliser la corrélation de Lee-Kesler pour calculer le facteur acentrique ω de chaque espèce de l'essence. En définissant le paramètre θ par la relation θ=Téb/Tc où Téb est la température d'ébullition de l'espèce et Tc la température critique, la relation de Lee-Kesler s'écrit :

$$\text{Ln Pc} = - (f1 + \omega f2)$$

où les paramètres f1 ou f2 sont donnés par les relations E11 :

$$\begin{cases} f_1 = 5{,}92714 - \dfrac{6{,}09648}{\theta} - 1{,}28862 \ln\theta + 0{,}169347\theta^6 \\ f_2 = 15{,}2518 - \dfrac{15{,}6875}{\theta} - 13{,}4721 \ln\theta + 0{,}43577\theta^6 \end{cases} \quad \text{(E11)}$$

Par exemple, sachant que pour le butane n-C4H10, la pression critique vaut Pc= 38,017 bar, la température critique Tc = 425,2 K et la température d'ébullition Téb = 272,7 K, le calcul du facteur acentrique par la méthode de Lee-Kesler donne ω = 0,197.

Les coefficients de fugacité de chaque composé dans chacune des phases sont calculés par la relation E12 :

$$Ln(\varphi_i) = \frac{b_i}{b_m}(Z-1) - Ln(Z - B*) + \frac{A*}{B*\sqrt{k^2 - 4k'}}\left(\frac{b_i}{b_m} - \delta_i\right)Ln\left(\frac{2Z + B*\left(k + \sqrt{k^2 - 4k'}\right)}{2Z - B*\left(k + \sqrt{k^2 - 4k'}\right)}\right) \quad \text{(E12)}$$

avec $\delta_i = \dfrac{2\sqrt{a_i}}{a_m}\displaystyle\sum_j X_j\sqrt{a_j}\left(1 - k_{ij}\right)$ où ki,j désigne les coefficients d'interaction binaire dans cette expression ; ai et bi le paramètre énergétique et le covolume de l'espèce i, $a_m$ et $b_m$ du mélange. Avec la connaissance des coefficients de fugacité, il devient alors possible de résoudre l'équation E7 et de déterminer la fraction de l'espèce i dans chacune des phases.

La méthode par le calcul des coefficients de fugacité de chacune des espèces du carburant est relativement précise puisque cette méthode permet de prendre en compte le phénomène de dissolution des gaz dans la phase liquide. En contrepartie, le calcul des coefficients de fugacité nécessite beaucoup de temps de calcul et la connaissance de beaucoup de coefficients différents pour chaque espèce. Ainsi, pour chaque espèce i, le calcul du coefficient de fugacité implique la connaissance de la température critique, de la pression critique et si possible du coefficient binaire d'interaction avec chacune des autres espèces gazeuses.

De ce fait, la méthode de calcul des coefficients de fugacité peut s'avérer peu commode à implémenter directement sur un ordinateur embarqué à bord d'un véhicule. Pour remédier à cet inconvénient, d'autres méthodes pour résoudre l'équation E7 peuvent être envisagées.

En particulier, il peut être avantageux de calculer préalablement les coefficients de fugacité par la méthode de calcul précédente afin de les tabuler. Il suffit alors de résoudre E7 avec les coefficients tabulés. Le temps de calcul est ainsi réduit. Il est alors possible d'utiliser un calculateur moins puissant pour implémenter la méthode. La méthode par tabulation des coefficients de fugacité est donc plus facilement mise en place dans un ordinateur embarqué que la méthode par calcul.

Un autre exemple de méthode plus simple à mettre en place que la méthode de calcul des coefficients de fugacité est une méthode où deux hypothèses sont préalablement réalisées. Les deux hypothèses sont l'hypothèse des gaz parfaits et l'hypothèse de mélange idéal dans la phase liquide. Ces hypothèses reviennent à considérer les coefficients de fugacité comme unitaires, ce qui permet de ne pas réaliser le calcul des coefficients de fugacité pour chaque espèce du carburant.

L'utilisation de la loi de Raoult permet alors d'obtenir des fractions molaires en phase gazeuse à l'état de saturation, par la relation E13 :

$$X_{i,gaz} = X_{i,liq} \cdot \frac{P_{i,sat}}{P} \quad \text{(E13)}$$

où Pi,sat est la pression de vapeur saturante et P est la pression du système.

La pression de vapeur saturante peut être calculée par la relation d'Antoine :

$$P_{i,sat} = 10^{\left( A_i - \frac{B_i}{C_i + T_{surface}} \right)} \quad \text{(E14)}$$

où Ai, Bi et Ci sont les coefficients d'Antoine et Tsurface est la température de la surface de l'interface entre la phase gazeuse et la phase liquide. Les coefficients Ai, Bi et Ci sont spécifiques de l'hydrocarbure i considéré et s'obtiennent par des corrélations.

La méthode est valable pour des mélanges d'hydrocarbures. Cette méthode basée sur l'hypothèse des gaz parfaits et la loi de Raoult est plus simple que la méthode de calcul des coefficients de fugacité. De ce fait, la méthode est particulièrement adaptée à une utilisation dans des ordinateurs embarqués à bord de voiture.

Mais, la méthode n'est pas applicable dans tous les cas. En particulier, la méthode n'est plus correcte dès lors que les différentes molécules du mélange ont de fortes interactions entre elles. Un mélange comprenant des espèces polaires comme les alcools est un exemple de mélange auquel la méthode basée sur l'hypothèse des gaz parfaits et la loi de Raoult ne peut pas s'appliquer.

Quelle que soit la méthode choisie pour mener le calcul de l'étape 14, l'étape 14 permet d'obtenir la composition chimique de la phase liquide à l'interface de la phase gazeuse et la phase liquide à une étape 16 ainsi que la composition chimique de la phase gazeuse à l'interface de la phase gazeuse et la phase liquide à une étape 18. L'information de la composition chimique n'est pas un paramètre physico-chimique trop réducteur comme la pression de vapeur. La connaissance de la composition chimique dans les deux phases permet en effet de connaître les caractéristiques essentielles du système.

A titre d'exemple, le tableau suivant présente les compositions chimiques des phases gazeuse et liquide obtenues aux étapes 16 et 18 du procédé pour une essence commerciale Sans Plomb 95 européenne actuelle, à une pression de 1 atm et une température de 20°C. Le calcul de l'étape 14 est effectué par la méthode de calcul des coefficients de fugacité.

| Espèce chimique | Phase liquide (fraction molaire) | Phase gazeuse (fraction molaire) |
|---|---|---|
| n-Butane | 0.078 | 0.160 |
| Isopentane | 0.136 | 0.108 |
| n-Pentane | 0.040 | 0.023 |
| Méthylbutène | 0.095 | 0.049 |
| MTBE | 0.054 | 0.015 |
| 2-Méthylpentane | 0.060 | 0.014 |
| Hexène | 0.043 | 0.009 |
| ETBE | 0.000 | 0.000 |
| Ethanol | 0.000 | 0.000 |
| Cyclohexane | 0.025 | 0.003 |
| n-Heptane | 0.063 | 0.003 |
| 2,2,4-Triméthylpentane | 0.073 | 0.004 |
| Toluène | 0.101 | 0.004 |
| m-Xylène | 0.109 | 0.001 |
| 1,2,4-Triméthylbenzène | 0.119 | 0.000 |
| Diazote | 0.001 | 0.472 |
| Dioxygène | 0.000 | 0.133 |

Le tableau met en évidence que certaines espèces ont commencé à s'évaporer comme le n-Butane ou le n-Pentane alors que d'autre espèces comme le m-Xylène ou le 1,2,4-Triméthylbenzène ont une fraction molaire en phase gazeuse nulle ou quasi-nulle.

La composition chimique des phases gazeuse et liquide à l'interface entre la phase gazeuse et la phase liquide correspond à la composition chimique au niveau du conduit d'admission du moteur. Il ne s'agit néanmoins pas de la composition chimique du mélange entre le carburant et l'air qui est brûlé au niveau de la bougie de la chambre de combustion. En effet, le passage de la phase gazeuse de l'interface entre la phase gazeuse et la phase liquide vers le coeur du conduit d'admission et vers le coeur de la chambre de combustion modifie la composition chimique du mélange parce que les espèces n'ont pas la même vitesse de déplacement dans la phase gazeuse. Il en résulte que la quantité d'espèces présentes à l'interface entre la phase gazeuse et la phase liquide n'est pas la même dans la chambre de combustion.

De ce fait, le procédé comprend en outre une étape 20 dans laquelle le transport en phase gazeuse est étudié. Cette analyse consiste à calculer le taux de transport de la phase gazeuse à l'aide de la composition chimique de la phase gazeuse à l'interface entre la phase gazeuse et la phase liquide. Le calcul est réalisé par utilisation d'un modèle. Ce modèle est un modèle de transport qui est valable pour les moteurs à injection indirecte c'est-à-dire des moteurs où le mélange carburant / air se fait avant l'admission dans la chambre de combustion. Cela signifie notamment que le mélange carburant / air est réalisé avant une soupape d'admission d'un des cylindres du moteur. Le modèle de transport s'appuie sur plusieurs hypothèses successivement exposées dans les paragraphes qui suivent.

On suppose d'abord qu'au démarrage, le carburant se dépose sous la forme d'un film liquide sur les parois froides du conduit d'admission du moteur. On admet alors que toute l'évaporation provient de l'évaporation du film liquide. L'évaporation dans le cylindre en fin de compression ainsi que l'évaporation liée à l'arrachage des gouttes du film liquide pendant l'ouverture de la soupape d'admission sont donc négligées. De plus, il est admis que l'évaporation a lieu pendant la phase d'admission (durant un aller du piston soit 180°V), c'est-à-dire le temps pendant lequel la soupape est ouverte. L'évaporation avant l'ouverture de la soupape, plus précisément entre l'injection et l'ouverture de la soupape, n'est pas prise en compte.

Du fait de la très grande différence de capacité calorifique entre le métal du conduit d'admission et le carburant liquide, la température du film liquide est supposée être la température du conduit d'admission lors du premier cycle du moteur. En outre, on admet, conformément à une hypothèse classique dans la littérature, que la hauteur du film liquide notée hfilm est proportionnelle à la masse injectée notée minj de carburant à une certaine puissance notée β : $h_{film} \propto$ $(m_{inj})^\beta$. La même relation peut être écrite entre la masse injectée et la surface du film liquide notée Sfilm :

$$S_{film} \propto \left(m_{inj}\right)^{1-\beta}$$

Il est courant dans la littérature d'attribuer à ce coefficient β une valeur proche de 0,5. Cependant, il ne s'agit que d'un exemple puisque le coefficient β dépend de diverses caractéristiques du moteur et notamment de la forme du conduit d'admission, de l'injecteur, ... Ce paramètre β peut ainsi servir à caler le modèle pour chaque moteur. On fait aussi les hypothèses que la hauteur et la surface du film liquide ne dépendent pas de la température et qu'il existe une surface mouillée maximum pour chaque conduit d'admission. Enfin, on suppose que la diffusion des espèces est infiniment rapide dans le film liquide. En d'autres termes, les fractions molaires des espèces sont homogènes dans le film liquide.

Le modèle de transport modélise ensuite le transport de l'espèce i dans la phase gazeuse par une relation issue de la théorie de la mécanique des fluides. En particulier, il est possible d'utiliser la relation E15 issue de la littérature :

$$\overset{\bullet}{m}_{\acute{e}vap,i} = \alpha * \left(0{,}552 * \mathrm{Re}^{0{,}5}\right) * \left(m_{inj}\right)^{1-\beta} * D_{FA} * \ln\left(1 + \frac{Y_{i,GAZ}}{1 - Y_{i,GAZ}}\right) \quad (E15)$$

où $\overset{\bullet}{m}_{\acute{e}vap,i}$ , $\alpha$, Re, DFA et $Y_{i,GAZ}$ sont des paramètres détaillés dans les paragraphes suivants.

Le paramètre $\overset{\bullet}{m}_{\acute{e}vap,i}$ est la dérivée temporelle de la masse de l'espèce i et représente le taux de transport de l'espèce i dans la phase gazeuse, depuis l'interface entre la phase gazeuse et la phase liquide vers le coeur du mélange gazeux. Le coefficient $\alpha$ est un coefficient à ajuster pour caler le modèle sur le moteur considéré. La constante Re est le nombre de Reynolds. La constante Re se calcule avec la vitesse moyenne dans le conduit d'admission. DFA est le coefficient de diffusion binaire entre le carburant et l'air. Il est possible de considérer un coefficient global DFA pour le carburant ou un coefficient DFA,i par espèce. Enfin, Yi,GAZ est la fraction massique de l'espèce i en phase gazeuse à l'interface entre la phase gazeuse et la phase liquide. La fraction massique de l'espèce i est liée à la fraction molaire calculée précédemment par application du modèle thermodynamique de l'étape 14.

De ce fait, compte tenu des hypothèses précédemment décrites, l'étape 20 permet de déterminer, à partir de la masse de carburant injectée, le taux de transport $\overset{\bullet}{m}_{\acute{e}vap,i}$ de chaque espèce i dans la phase gazeuse, depuis l'interface entre la phase gazeuse et la phase liquide vers le coeur du mélange gazeux.

Une étape 22 supplémentaire du procédé peut en outre permettre de déduire la richesse du mélange air/carburant obtenu à l'aide d'un calcul. La richesse du mélange carburé dans le cylindre est obtenue par le rapport entre la valeur de l'intégrale de la somme des taux de transport dans la phase gaz $\overset{\bullet}{m}_{\acute{e}vap,i}$ sur 180°V et la valeur du volume d'air introduit.

Le mélange carburé dans le cylindre étant considéré comme homogène, la richesse obtenue à l'étape 22 correspond à la richesse au point d'allumage. Le procédé permet ainsi de déterminer la richesse au point d'allumage à partir de conditions de pression, de température données et d'une masse de carburant injecté donnée. Enfin, lors d'une étape 24 suivante, on détermine la quantité théorique de carburant à injecter.

Pour réaliser la détermination, la richesse obtenue à l'étape 22 est comparée à une valeur prédéterminée de richesse à atteindre. La valeur de la richesse à atteindre pour assurer un bon démarrage du véhicule dépend notamment du moteur considéré et de la puissance de la bougie. Par exemple, la littérature s'accorde usuellement autour d'une richesse de 0,75 à 0,8 pour permettre la première combustion.

La quantité théorique de carburant à injecter au démarrage peut être obtenue par itérations successives sur la masse de carburant à injecter. Une masse initiale d'injection est arbitrairement choisie. Si cette masse initiale conduit à une richesse supérieure à la valeur prédéterminée de richesse à atteindre, cela signifie que la masse à injecter est trop importante. Le calcul de l'étape 20 est alors recommencé avec une masse à injecter plus petite. Au contraire, si cette masse initiale correspond à une richesse inférieure à la valeur prédéterminée de richesse à atteindre, le calcul de l'étape 20 est repris avec la masse à injecter augmentée. Le processus est réitéré jusqu'à ce qu'une richesse satisfaisante soit obtenue.

La quantité théorique de carburant à injecter peut aussi être obtenue par utilisation de tables donnant la quantité de carburant liquide à utiliser au démarrage. Une manière commode d'implémenter cette méthode informatiquement peut être d'utiliser une base de données dans un ordinateur de bord du véhicule.

La quantité théorique de carburant à injecter est ainsi connue lors d'une dernière étape 26. Conformément à l'invention, cette quantité théorique est ensuite corrigée pour en déduire une quantité réelle optimale à injecter dans le moteur, ou plus généralement utilisée pour en déduire un autre paramètre réel optimal de contrôle moteur.

**Estimation de la quantité réelle de carburant à injecter par correction de la quantité théorique calculée**

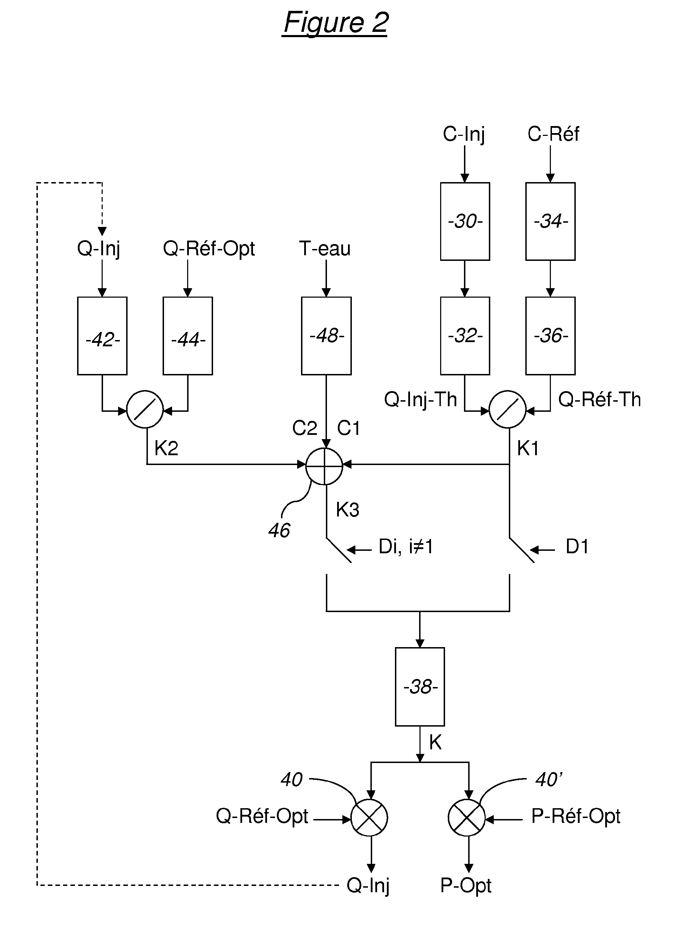

Un procédé de détermination d'une quantité de carburant à injecter au démarrage d'un moteur à combustion interne selon un mode de réalisation de l'invention est illustré sur la figure 2. Ce mode de réalisation est notamment adapté dans le cas où la composition chimique du carburant à injecter C-Inj est déterminée par application d'un modèle de composition chimique selon un ensemble prédéterminé de composants élémentaires, par exemple comme cela a été décrit lorsque l'étape 14 précédemment citée est mise en oeuvre.

Lors d'un premier démarrage D1 avec le carburant C-Inj, une première étape 30 consiste à analyser le carburant C-Inj et à en déterminer la composition chimique, par exemple à l'aide d'un capteur NIR. Elle correspond aux étapes 10 et 12 décrites précédemment.

Ensuite, lors d'une étape 32, la quantité théorique Q-Inj-Th de carburant C-Inj à injecter au démarrage dans le moteur est déterminée, par exemple conformément à la méthode de calcul décrite précédemment. L'étape 32 correspond donc aux étapes 14 à 26 appliquées au carburant C-Inj.

L'homme de l'art notera cependant que les étapes de correction qui seront décrites ci-dessous sont indépendantes de la méthode de calcul décrite précédemment, dans la mesure où une autre méthode de calcul pourrait être choisie sans que cela ne change le procédé de correction qui va maintenant être détaillé.

Une étape d'analyse 34, identique à l'étape 30, est appliquée à un autre carburant de référence C-Réf pour en déterminer la composition chimique. Sur la base de cette composition chimique, une étape 36, identique à l'étape 32, est appliquée au carburant de référence C-Réf pour déterminer de la même façon (c'est-à-dire sur le même modèle de calcul) une quantité théorique Q-Réf-Th de carburant de référence C-Réf à injecter dans le moteur.

Les résultats des étapes 32 et 36 permettent de calculer un ratio K1 entre la quantité théorique de carburant à injecter au démarrage dans le moteur et la quantité théorique de carburant de référence à injecter au démarrage dans le moteur :

$$K1 = Q\text{-}Inj\text{-}Th \, / \, Q\text{-}R\acute{e}f\text{-}Th.$$

Au premier démarrage D1, ce ratio K1 est ensuite éventuellement traité lors d'une étape de vérification optionnelle 38 consistant à vérifier qu'il est compris entre une valeur minimale prédéterminée Kmin et une valeur maximale prédéterminée Kmax, et fourni en tant que coefficient multiplicateur K. Lors de cette étape optionnelle 38 :

- si K1 est inférieur à Kmin, alors K = Kmin,

- si K1 est supérieur à Kmax, alors K = Kmax,

- sinon, K = K1.

Il peut être en effet intéressant de limiter les valeurs de K entre des limites inférieures et supérieures de sorte que la recherche d'une valeur optimale pour K ne génère pas d'effets secondaires indésirables tels qu'un encrassement des bougies ou un problème de dilution du carburant dans l'huile.

Enfin, lors d'une étape 40, on calcule le produit de ce coefficient multiplicateur K et d'une valeur mesurée de quantité optimale Q-Réf-Opt de carburant de référence C-Réf à injecter au premier démarrage.

Cette quantité optimale Q-Réf-Opt est obtenue par une recherche à l'aide de mesures d'un point optimal dans une courbe de quantités injectées de carburant de référence fonction du régime, dans les mêmes conditions de températures d'air, d'eau et de pression atmosphérique que celles dans lesquelles se trouve le carburant à injecter C-Inj et qui ont été prises en compte dans le modèle de calcul. De façon pratique, on construit une cartographie de valeurs de Q-Réf-Opt en fonction de plusieurs valeurs des paramètres de régime, de températures d'air et d'eau et de pression atmosphérique, dans laquelle on puise la valeur retenue de Q-Réf-Opt à l'étape 40. La quantité Q-Inj corrigée de carburant C-inj qui doit être injectée dans le moteur est donc donnée par la relation : Q-inj = K.Q-Réf-Opt.

Cette quantité corrigée Q-inj obtenue en étape 40 donne de meilleurs résultats que la quantité Q-inj-Th calculée à l'étape 32 en terme d'efficacité au démarrage et de réduction des émissions polluantes. L'exécution des étapes 34 à 40 pour corriger la valeur de Q-inj-Th en Q-Inj au premier démarrage est une solution parmi d'autres possibles dans le cadre de l'invention, pour obtenir une valeur optimale de carburant à injecter au premier démarrage. Elle exploite l'idée que même si le modèle de calcul décrit précédemment ne permet pas nécessairement d'obtenir une commande optimale de quantité de carburant à injecter, le ratio entre la quantité de carburant C-Inj à injecter et la quantité de carburant C-Réf à injecter est conservé, que ce soit par calcul ou par recherche d'optimalité (par mesures). Ce ratio utilisé en tant que coefficient multiplicateur de correction est avantageusement appliqué sur les premières quantités de carburant injectées au premier démarrage ainsi que sur les quantités injectées pendant la prise de régime du moteur.

Lors d'un plein de réservoir avec un carburant différent, le carburant présent dans la rampe d'alimentation du moteur est toujours celui qui était présent à l'arrêt du moteur. Après quelques minutes de fonctionnement, le nouveau carburant est détecté par le capteur NIR et un nouveau ratio K1, donc un nouveau coefficient multiplicateur K, est calculé. C'est ce nouveau coefficient multiplicateur qui pourra alors être pris en compte selon le mode de réalisation précité au premier démarrage suivant.

Au cours d'un démarrage ultérieur avec le carburant C-Inj, postérieur au premier démarrage utilisant C-Inj et décrit ci-dessus, le procédé est complété de manière à corriger la quantité théorique Q-Inj-Th en outre à l'aide de paramètres dont au moins une partie est déterminée par une validation préalable, sur une pluralité de carburants prédéterminés, du modèle de composition chimique appliqué au carburant à injecter C-Inj.

Ainsi, lors du premier démarrage après détection du carburant à injecter C-Inj, les quantités effectivement injectées Q-Inj à chaque tour de piston sont intégrées entre le démarrage et une vitesse de rotation prédéterminée du moteur au cours d'une étape d'intégration 42. On obtient une valeur de quantité totale de carburant injectée entre le démarrage et la vitesse de rotation prédéterminée du moteur, notée $Q_{\text{-Inj-Total}}$. De façon pratique, chaque tour de piston est par exemple repéré par le passage au Point Mort Haut (PMH) de l'un des pistons du moteur et la vitesse de rotation prédéterminée du moteur peut être choisie à 800 tours/mn.

Lors d'une étape 44, on détermine, pour la température d'eau, d'air et de pression atmosphérique, au moyen d'une cartographie au préalable remplie par essais lors de la mise au point, la valeur de Q-Réf-Total qui est l'intégration des quantités effectivement injectées à chaque tour de piston entre le démarrage et une vitesse de rotation prédéterminée du moteur.

De façon pratique, on peut construire une cartographie de valeurs de Q-Réf-Total en fonction de la cartographie précitée des valeurs de Q-Réf-Opt. Les résultats des étapes 42 et 44 permettent de calculer un ratio K2 entre la somme de quantités réelles de carburant injectées entre le démarrage et la vitesse de rotation prédéterminée du moteur lors du premier démarrage et la somme des quantités optimales de carburant de référence à injecter entre le démarrage et cette vitesse de rotation prédéterminée du moteur dans les mêmes conditions :

$$K2 = Q\text{-Inj-Total} / Q\text{-Réf-Total}.$$

Cette valeur de K2 est donc disponible pour les démarrages Di, i≠1, postérieurs au premier démarrage D1. Elle est par exemple combinée linéairement avec K1 à l'aide de coefficients de pondération C1 et C2 pour donner un coefficient multiplicateur K3 = C1.K1 + C2.K2. Ces coefficients de pondération sont par exemple exprimés en pourcentage ou fraction d'unité.

Ils sont estimés lors d'une étape 48 de validation préalable, sur une pluralité de carburants prédéterminés, du modèle de composition chimique appliqué au carburant à injecter. Au cours de cette étape de validation, réalisée à l'aide de tests et mesures, la composition des carburants prédéterminés est analysée avec le capteur NIR et les coefficients de pondération sont déterminés pour que K3 soit le plus proche possible des quantités optimales de carburants prédéterminés à injecter dans le moteur. Des valeurs différentes de ces coefficients de pondération sont calculées pour des valeurs différentes de température d'eau T-eau pour affiner la pondération. De la sorte, cette validation permet de compenser l'imperfection du modèle de composition de carburant utilisé (notamment simplifié pour réduire la complexité des calculs) en appliquant au carburant C-Inj les bonnes valeurs des coefficients trouvés en fonction de T-eau.

Pour les démarrages Di, i≠1, postérieurs au premier démarrage D1, c'est donc la valeur de K3 qui est prise en compte, et non plus celle de K1, pour l'estimation de Q-Inj. Cependant, comme au premier démarrage, le coefficient K3 peut être traité au cours de l'étape optionnelle 38 pour donner la valeur finale du coefficient multiplicateur K.

**Estimation d'un autre paramètre réel de contrôle moteur par correction d'une valeur de référence optimale**

Comme représenté sur la figure 2 également, l'étape 40 peut être remplacée ou complétée par une étape 40' lors de laquelle on utilise le coefficient multiplicateur K obtenu pour estimer un autre paramètre réel de contrôle moteur à optimiser P-Opt.

Cet autre paramètre de contrôle moteur est par exemple un paramètre d'avance à l'allumage au démarrage, en mise en action ou en transition de charge, ou un paramètre de position d'actionneurs tels qu'un actionneur VVT (de l'anglais « Variation Valve Timing »), une valve à levée variable, une valve papillon, une consigne de pression.

On utilise pour cela une valeur de référence optimale P-Réf-Opt de ce paramètre, obtenue par mesure, sur la base du carburant de référence C-Réf.

Comme pour Q-Réf-Opt, cette valeur de référence optimale P-Réf-Opt est obtenue par une recherche à l'aide de mesures d'un point optimal en fonction de valeurs obtenues pour le carburant de référence, dans les mêmes conditions de régime, de températures d'air et d'eau et de pression atmosphérique que celles dans lesquelles se trouve le carburant à injecter C-Inj et qui ont été prises en compte dans le modèle de calcul. De façon pratique, on construit une cartographie de valeurs de P-Réf-Opt en fonction de plusieurs valeurs des paramètres de régime, de températures d'air et d'eau et de pression atmosphérique, dans laquelle on puise la valeur retenue de P-Réf-Opt à l'étape 40'.

Le paramètre réel de contrôle moteur à optimiser P-Opt pour le carburant C-inj qui doit être injectée dans le moteur est donc donné par la relation : P-Opt = f(K, P-Réf-Opt).

La fonction f peut être, comme précédemment, une simple multiplication, mais aussi une addition, une fonction affine ou une autre fonction plus complexe, selon la nature du paramètre moteur à optimiser. L'idée exploitée ici est que le coefficient K peut être utilisé pour une certaine variété de paramètres moteur devant être ajustés en présence du carburant C-Inj.

Le procédé décrit précédemment permet de réduire les émissions polluantes, notamment les émissions de $CO_2$. De ce fait, la charge en métaux précieux du catalyseur placé en post-traitement de la ligne d'échappement peut être diminuée. Le coût du post-traitement catalytique est donc réduit. Le prix de revient de fabrication du véhicule est ainsi diminué. La qualité et la robustesse de la prestation démarrage / mise en action est aussi améliorée. De plus, cette prestation ne dépend plus du carburant, que ce soit d'un pays à l'autre ou d'une saison à l'autre.

A bord d'un véhicule, le procédé peut être utilisé dans un organe de contrôle du moteur. L'information « composition détaillée du carburant » est par exemple obtenue par un capteur NIR embarqué, immergé dans le réservoir de carburant du véhicule. La donnée de sortie de ce procédé (quantité de carburant liquide à injecter au démarrage Q-Inj ou autres paramètres de contrôle moteur) est une donnée d'entrée des lois de commande du contrôle moteur. La qualité de la prestation de démarrage et de fonctionnement du véhicule est améliorée. De plus, les défaillances et les coûts de garantie sont diminués. Tous ces éléments contribuent à augmenter la satisfaction de l'utilisateur. Le procédé peut aussi être utilisé dans un outil d'aide à la mise au point d'un moteur, notamment en laboratoire. Le temps de mise au point des modèles est ainsi diminué. Le nombre d'essais nécessaires à la mise au point du démarrage peut être diminué. De plus, cela permet de calibrer la masse initiale de carburant utilisée à l'étape 24 décrite précédemment.

## Revendications

1. Procédé de détermination, au démarrage d'un moteur à combustion interne, d'un paramètre de contrôle moteur (Q-Inj, P-Opt) en fonction d'un carburant (C-Inj), **caractérisé en ce qu'**il comporte une estimation (30, 32) d'une quantité théorique (Q-Inj-Th) de carburant à injecter par l'utilisation d'un modèle de calcul basé sur une composition chimique prédéterminée du carburant déterminée par application (30) d'un modèle de composition chimique selon un ensemble prédéterminé de composants élémentaires, et une détermination (34, 36, 38, 40) du paramètre de contrôle moteur (Q-Inj, P-Opt) par correction d'une valeur de référence optimale (P-Réf-Opt) de ce paramètre mesurée pour un carburant de référence à l'aide de cette quantité théorique (Q-Inj-Th) estimée et de paramètres (C1, C2, K1, K2, K3) dont au moins une partie (C1, C2) est déterminée par une validation préalable (48), sur une pluralité de carburants prédéterminés, du modèle de composition chimique appliqué au carburant (C-Inj).

2. Procédé selon la revendication 1, dans lequel la composition chimique du carburant à injecter (C-Inj) est déterminée à l'aide d'un dispositif d'analyse embarqué à bord d'un véhicule, notamment de type capteur opto-électronique utilisant la spectroscopie proche infrarouge.

3. Procédé selon la revendication 1 ou la revendication 2, comportant le calcul d'un ratio (K2) entre une somme de quantités réelles de carburant injectées entre le démarrage et une vitesse de rotation prédéterminée du moteur lors d'un démarrage précédent et une somme de quantités optimales d'un carburant de référence (C-Réf) à injecter entre le démarrage et cette vitesse de rotation prédéterminée du moteur, et dans lequel ce ratio (K2) est pris en compte dans la correction selon un coefficient de pondération (C2) déterminé par la validation préalable (48), sur la pluralité de carburants prédéterminés, du modèle de composition chimique appliqué au carburant.

4. Procédé selon l'une quelconque des revendications 1 à 3, dans lequel le paramètre de contrôle moteur est une quantité (Q-Inj) de carburant (C-Inj) à injecter au démarrage du moteur à combustion interne.

5. Procédé selon la revendication 4, dans lequel la détermination de la quantité réelle (Q-Inj) de carburant à injecter au démarrage dans le moteur comporte les étapes de calcul d'un ratio supplémentaire (K1) entre la quantité théorique (Q-Inj-Th) de carburant à injecter au démarrage dans le moteur et une quantité théorique (Q-Réf-Th) de carburant de référence à injecter au démarrage dans le moteur, de détermination d'un coefficient multiplicateur (K) sur la base du ratio (K2) et du ratio supplémentaire (K1), et de détermination (40) de la quantité réelle (Q-Inj) de carburant à injecter au démarrage dans le moteur, en tant que produit de ce coefficient multiplicateur (K) et d'une valeur mesurée (Q-Réf-Opt) d'une quantité optimale de carburant de référence à injecter au démarrage.

6. Procédé selon la revendication 5, dans lequel la détermination du coefficient multiplicateur (K) comporte une étape (38) de vérification que le coefficient multiplicateur est compris entre une valeur minimale prédéterminée et une valeur maximale prédéterminée.

7. Procédé selon la revendication 6, dans lequel, lors de l'étape de vérification (38) :

- si le coefficient multiplicateur est inférieur à la valeur minimale, celle-ci lui est affectée,
- si le coefficient multiplicateur est supérieur à la valeur maximale, celle-ci lui est affectée,
- sinon, le coefficient multiplicateur est inchangé.

8. Procédé selon l'une quelconque des revendications 5 à 7, dans lequel le coefficient multiplicateur (K) est déterminé (46, 38) par une combinaison linéaire (K3) du ratio (K2) et du ratio supplémentaire (K1).

9. Procédé selon la revendication 8, dans lequel les coefficients de pondération (C1, C2) du ratio (K2) et du ratio supplémentaire (K1) dans la combinaison linéaire (K3) sont estimés lors de la validation préalable (48), sur la pluralité de carburants prédéterminés, du modèle de composition chimique appliqué au carburant à injecter (C-Inj).

10. Procédé selon l'une quelconque des revendications 5 à 9, dans lequel le coefficient multiplicateur (K) est choisi égal au ratio supplémentaire (K1) avant l'étape de vérification (38), lors d'un premier démarrage (D1) du moteur avec ce carburant (C-Inj), et égal à la combinaison linéaire (K3) du ratio (K2) et du ratio supplémentaire (K1) avant l'étape de vérification (38), lors d'autres démarrages (Di) du moteur avec ce carburant (C-Inj).

## *Figure 1*

# *Figure 2*

**Europäisches Patentamt**
**European Patent Office**
**Office européen des brevets**

## RAPPORT DE RECHERCHE EUROPEENNE

Numéro de la demande

EP 09 16 6180

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 6 314 944 B1 (MAJIMA YOSHIHIRO [JP]) 13 novembre 2001 (2001-11-13) * figures 3-5 * * colonne 1, ligne 52 - colonne 2, ligne 6 * * colonne 4, ligne 8 - colonne 8, ligne 38 * ----- | 1-2,4 | INV. F02D41/00 F02D41/06 |
| Y | EP 1 195 509 A (TOYOTA MOTOR CO LTD [JP]) 10 avril 2002 (2002-04-10) * alinéas [0001] - [0012] * * revendications 1-13 * ----- | 1-2,4 | |
| A | US 6 079 396 A (AMENT FRANK [US] ET AL) 27 juin 2000 (2000-06-27) * figure 2 * * colonne 1, ligne 63 - colonne 0, ligne 44 * ----- | 1-10 | |
| A | WO 2006/067204 A (MAGNETI MARELLI POWERTRAIN SPA [IT]; RUGGIANO RENZO [IT]; MAZET HENRI) 29 juin 2006 (2006-06-29) * figure 2 * * page 1, ligne 25 - page 4, ligne 3 * * page 6, ligne 15 - page 11, ligne 12 * ----- | 1-10 | DOMAINES TECHNIQUES RECHERCHES (IPC) F02D |
| A | WO 2007/071659 A (INERGY AUTOMOTIVE SYSTEMS RES [BE]; GRANT ERIC [US]; BEHAR RON [US]; M) 28 juin 2007 (2007-06-28) * page 1, ligne 8-23 * * page 3, ligne 1-27 * * page 5, ligne 17-32 * * page 6, ligne 23 - page 7, ligne 11 * ----- | 1-10 | |

Le présent rapport a été établi pour toutes les revendications

| Lieu de la recherche | Date d'achèvement de la recherche | Examinateur |
|---|---|---|
| La Haye | 20 novembre 2009 | Parmentier, Hélène |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 16 6180

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-11-2009

| Document brevet cité au rapport de recherche | | Date de publication | Membre(s) de la famille de brevet(s) | | Date de publication |
|---|---|---|---|---|---|
| US 6314944 | B1 | 13-11-2001 | JP | 2001107796 A | 17-04-2001 |
| EP 1195509 | A | 10-04-2002 | JP | 2002115585 A | 19-04-2002 |
| | | | KR | 20020027228 A | 13-04-2002 |
| | | | US | 2002040705 A1 | 11-04-2002 |
| US 6079396 | A | 27-06-2000 | AUCUN | | |
| WO 2006067204 | A | 29-06-2006 | AT | 404785 T | 15-08-2008 |
| | | | BR | PI0519211 A2 | 06-01-2009 |
| | | | CN | 101128663 A | 20-02-2008 |
| | | | EP | 1831524 A1 | 12-09-2007 |
| | | | ES | 2312046 T3 | 16-02-2009 |
| | | | PT | 1831524 E | 24-10-2008 |
| | | | US | 2009025689 A1 | 29-01-2009 |
| WO 2007071659 | A | 28-06-2007 | CN | 101346539 A | 14-01-2009 |
| | | | EP | 1801394 A1 | 27-06-2007 |
| | | | EP | 1966474 A1 | 10-09-2008 |
| | | | JP | 2009520909 T | 28-05-2009 |
| | | | KR | 20080087127 A | 30-09-2008 |
| | | | US | 2009114288 A1 | 07-05-2009 |

EPO FORM P0460

Pour tout renseignement concernant cette annexe : voir Journal Officiel de l'Office européen des brevets, No.12/82